# EUROPEAN PATENT SPECIFICATION

(11) **EP 1 791 686 B1**
(45) Date of publication and mention of the grant of the patent: **29.10.2014**
(21) Application number: 05748309.1
(22) Date of filing: 26.05.2005
(51) Int. Cl.: B29C 47/92, B29C 47/90, G02B 6/44

(54) **METHOD OF MANUFACTURING A TUBE**
VERFAHREN ZUR HERSTELLUNG EINES ROHRS
PROCÉDÉ DE FABRICATION D'UN TUBE

(30) Priority: 24.09.2004 GB 0421199
(43) Date of publication of application: 06.06.2007
(73) Proprietor: Emtelle UK Limited, Hawick Scotland TD9 8LF (GB)
(72) Inventor: BROWN, George, Henry, Platt, Galashiels, Scotland TD1 1RQ (GB)
(74) Representative: Vinsome, Rex Martin
(86) International application number: PCT/GB2005/002122
(87) International publication number: WO 2006/032830

(56) References cited:
- DE-A1- 2 525 937
- DE-B- 1 251 014
- JP-A- 9 145 304
- US-A- 2 491 589
- PATENT ABSTRACTS OF JAPAN vol. 2000, no. 11, 3 January 2001 (2001-01-03) -& JP 2000 211015 A (MITSUBISHI CHEMICALS CORP), 2 August 2000 (2000-08-02)
- PATENT ABSTRACTS OF JAPAN vol. 1996, no. 11, 29 November 1996 (1996-11-29) & JP 08 178854 A (SUMITOMO ELECTRIC IND LTD), 12 July 1996 (1996-07-12)
- PATENT ABSTRACTS OF JAPAN vol. 007, no. 153 (M-226), 5 July 1983 (1983-07-05) & JP 58 062023 A (SUMITOMO DENKI KOGYO KK), 13 April 1983 (1983-04-13)

## Description

The present invention relates to a method of manufacturing a tube. The invention relates particularly, but not exclusively, to a method of manufacturing a tube used to convey fluids, or in some cases a solid material, from one place to another.

In order to efficiently convey fluids and / or solid materials through a tube, it is desirable that the interior of the tube should be substantially free of obstructions.

However tubes, particularly tubes of plastics materials manufactured by extrusion methods, are susceptible to becoming at least partially blocked by pieces of molten plastic building up on the extrusion die and periodically breaking off in lumps and attaching to the interior of the tube, which prevents the tubes being used effectively. This is particularly the case where tubes are extruded at high line speeds. It is therefore desirable that tubes are inspected along their length to ensure that any internal obstructions are insufficiently large.

In situations where the tube being manufactured has a relatively large diameter and is not excessively long, visual inspection is possible. For example, a water pipe of polyvinylchloride (PVC) having an internal diameter of 160 mm and a length of 6.0m would be relatively easy to inspect for internal obstructions.

However, it is often the case that the tube being manufactured has to be of a relatively small diameter. For example, tubes for receiving optical fibre cables often have diameters as small as 3mm. The optical fibres are installed in the tubes by way of blowing the optical fibres using compressed air, or by way of pulling the optical fibres through the tubes.

Moreover, manufacturing tubes in very long lengths, as opposed to shorter discrete lengths, improves the economics of manufacture and therefore reduces manufacturing costs.

In situations in which the tube being manufactured has a relatively small diameter and is long, visual inspection is often difficult. Furthermore, small diameter tubes of long length tend to be manufactured by extrusion at high line speeds, making visual inspection of the interior of the tube during manufacture very difficult. Moreover, long lengths of small diameter tubes tend to be manufactured as coils or are wound onto a drum, which also makes visual inspection of the interior of the tube after manufacture very difficult.

It is known to inspect the interior of small diameter tubes of long length which have been wound on a coil after manufacture by means of blowing a ball bearing or the like through the tube using pressurised air. As the ball bearing travels through the interior of the tube at high speed, any obstructions on the interior stop the movement of the ball bearing indicating that there is a fault with the tube. The diameter of the ball bearing being blown through is selected to be close to but slightly smaller than the specified internal diameter of the tube. If there is a fault, then the length of tube is rejected entirely. There are however disadvantages associated with this technique, for example the fact that the pressure of the air required to blow the ball bearing at high speed through the interior of the small diameter tube of long length is required to be very high, which can make the process dangerous for the personnel involved. Even when using these high pressures, the time taken to blow the ball bearing through the complete length of the tube is long, resulting in significant delays in the manufacturing process. By way of example, it has been found that it takes approximately 40 minutes to blow a 3.2mm diameter ball bearing through a tube with an internal diameter of 3.5mm using 20 bars of pressure, where the length of the tube is 4000 metres. If the length of the tube is increased to 8000 metres, as is often the case, then the time taken to blow the ball bearing through the tube would be measured in hours rather than minutes.

JP 9-145304 describes a method of manufacture of a tube, which aims to overcome the problems associated with inspecting the internal bore of the tube. The method comprises the steps of ensuring that the tube follows a path including a U-bend, during its manufacture; and inserting a metal ball into the tube during its manufacture. The metal ball is then carried along with the tube by means of friction, until it reaches the bottom of the U-bend. At this point, the friction between the metal ball and the interior of the tube is generally insufficient to allow the metal ball to move vertically upwards from the bottom of the U-bend. Accordingly, the metal ball remains at the bottom of the U-bend as the tube moves over the metal ball. However, if there is a fault with the internal bore of the tube, for example, an internal obstruction, then the metal ball catches on the obstruction and is carried vertically upwards from the bottom of the U-bend. The metal ball is then carried past a metal detector, which triggers an alarm to indicate that an internal obstruction is present inside the tube.

The method of JP 9-145304 includes a number of disadvantages. For example, if the speed of manufacture of the tube is rapidly increased, then the metal ball may be inadvertently carried vertically upwards from the bottom of the U-bend and past the metal detector even in the case where no internal obstructions are present in the tube. Moreover, the method of JP 9-145304 does not provide for any calibration, which results in even tiny imperfections which would not generally affect the operational characteristics of the tube, causing the metal ball to be carried past the metal detector.

Preferred embodiments of the present invention seek to overcome the above disadvantages of the prior art.

According to claim 1 of the present invention there is provided a method of manufacturing a tube, the method comprising the steps of forming a tube by extrusion; and causing a body to move longitudinally relative to the internal bore of the tube, and determining whether the body ceases to move relative to the tube, wherein: - at least part of said extrusion step and said step of causing a body to move relative to the internal bore of the tube are carried out simultaneously; characterised in that the body is caused to move relative to the internal bore of the tube by means of at least one first tensile element attached to said body.

This provides the advantage that the tube can be conveniently monitored for internal obstructions without relying upon the visual inspection techniques of the prior art. If the interior of the tube includes a significant obstruction likely to adversely affect the performance of the tube, the body will be found to have ceased movement relative to the tube as a result of becoming trapped in the bore of the tube.

This also provides the advantage that the inspection process can form part of a continuous manufacturing process, which enables efficient and cost effective manufacture of the tube.

Preferably, the body is caused to move relative to the internal bore of the tube by means of restraining said body using said first tensile element, said first tensile element having a predetermined breaking strain, and pulling the tube by means of a traction means.

This provides the advantage that the body may be conveniently restrained in position whilst the tube is moved along an in-line apparatus for example, and is simultaneously monitored for obstructions as it moves along the in-line apparatus. By determining whether a body moves from a fixed point, (which is the case when the body is restrained in position but encounters an obstruction in the moving tube), this provides the advantage of enabling the inspection process to be carried out in a simple and straightforward manner.

Moreover, this provides the advantage that calibration is facilitated, in that first tensile elements having different breaking strains may be used according to the size of internal obstruction considered acceptable. For example, if even small internal obstructions are undesirable, a first tensile element having a relatively low breaking strain may be used.

Preferably, at least one said first tensile element is a wire.

At least one said first tensile element may comprise plastics material.

It is preferred that the body is caused to move relative to the internal bore of the tube by means of at least one second tensile element connected to at least one said first tensile element, wherein at least one said second tensile element has a pre-determined breaking strain lower than the breaking strain of at least one said first tensile element.

This provides the advantage that, in the event that the body becomes trapped in the interior of the tube as the body is moved relative to the tube, the location of the break can be controlled such that the breakage occurs in the region of the weaker second tensile element, which may be at a convenient location such as outside of the tube.

Preferably, at least one said second tensile element is a wire.

Preferably, at least one said second tensile element may comprise a fishing line.

Preferably, the body is made from metal and the step of determining whether body ceases to move relative to the tube comprises using a metal detection device located outside of the tube to monitor the location of the body inside the bore of the tube.

In this way, the tube can be conveniently monitored for obstructions.

The method may further comprise the step of generating a signal in response to detection that the body ceases to move along the tube.

The method may further comprise the step of actuating an alarm in response to said signal.

Preferably, the method of manufacture further comprises the step of cutting said tube at a location adjacent where said body ceases to move relative to said tube in response to detection that the body ceases to move along the tube.

This provides the advantage of enabling a tube substantially free of significant obstructions to be manufactured by means of a continuous manufacturing process.

The tube may be cut in response to said signal.

The method may further comprise the step of installing at least one optical fibre in said tube simultaneously with the step of forming said tube by extrusion.

This provides the advantage that the manufacturing process is both simplified and accelerated, thereby reducing costs. Moreover, this provides the advantage that, in the event that the optical fibres need replacing after their installation, the tube is substantially free of internal obstructions to facilitate the installation of further optical fibres.

The method may further comprise the step of installing at least one pull cord in said tube simultaneously with the step of forming said tube by extrusion.

This provides the advantage that pull cords, which may subsequently be used to pull optical fibres or optical fibre cables through the tube, may be installed at the same time as the tube is extruded. This simplifies the manufacturing process and thereby reduces costs.

The body may be provided with at least one aperture through which at least one of at least one said optical fibre and at least one said pull cord passes as the body is caused to move relative to the internal bore of the tube.

This provides the advantage that, in the event that the optical fibres or pull cord are installed in the tube at the same time as the tube is extruded, the body may still be pulled through the internal bore of the tube to monitor the internal bore of the tube for obstructions.

A preferred embodiment of the present invention will now be described, by way of example only and not in any limitative sense, with reference to the accompanying drawings in which: -
Figure 1 shows a schematic view of an apparatus for carrying out a method embodying the present invention; and
Figure 2 shows a perspective view of an embodiment of a body forming part of an in-line apparatus used to facilitate the method of the present invention.

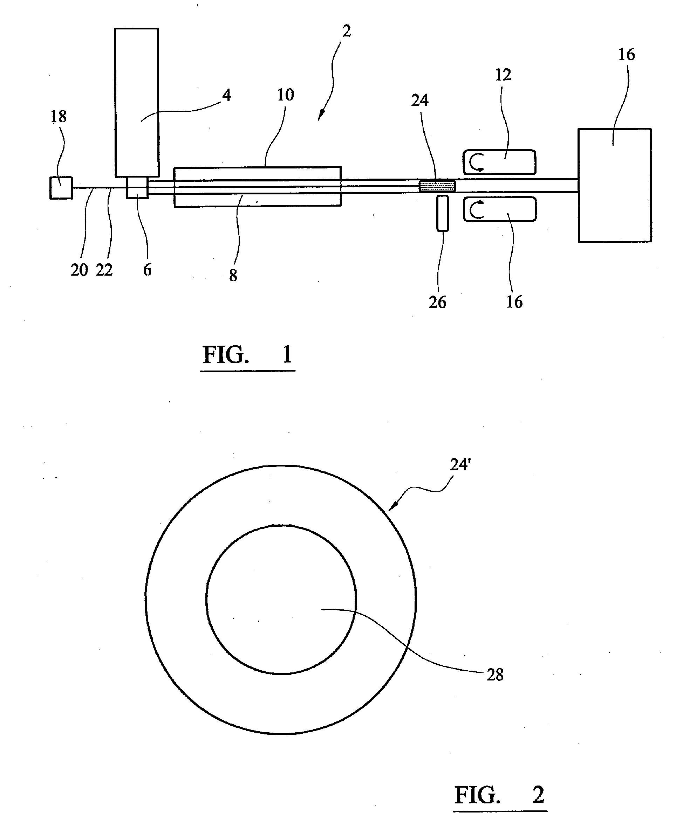

With reference to Figure 1, an in-line apparatus 2 comprises an extruder 4 which feeds molten plastic material such as polyethylene into a crosshead die 6, thereby producing a tube 8 which is then cooled and calibrated to the correct external diameter in a vacuum tank 10. The tube is advanced through the apparatus 2 from left to right as shown in the Figure by means of a caterpillar haul off device 12 having rollers and a rubber gripping belt 16 and then the tube 8 is wound onto a drum (not shown)by means of a take up unit 16. Such equipment for manufacturing tubes can be purchased from Nextrom Technologies, Route du Bois 37, CH-1024 Ecublens, Lausanne, Switzerland.

The apparatus 2 further comprises a body in the form of a metal slug 24 having a diameter slightly smaller than the internal diameter of the tube 8. The slug 24 is attached to one end of a first tensile element in the form of a first wire 22, and the other end of the first wire 22 is attached to one end of a second tensile element in the form of a second wire 20. The breaking strain of the second wire 20 is lower than that of the first wire 22.

The other end of the second wire 20 is fixed in position to a fixing point 18 that the slug 24 is restrained at a fixed distance from the fixing point 18 until the wire 20 breaks.

The apparatus further comprises a proximity switch 26 which detects the presence of the metal slug 24 in the tube 8. Such devices are well known to persons skilled in the art, for example a suitable product is the M18 Inductive DC Proximity Switch which can be purchased from Ifcom UK Ltd., Unit 11, Victoria Business Centre, Rochsolloch Road, Airdrie M16 9BG United kingdom.

In order to detect significant obstructions on the interior surface of the tube 8 which are likely to adversely affect the performance of the tube 8, when the tube 8 advances from the crosshead die 6, it is pulled along by means of the caterpillar haul off device 12 such that the interior of the tube 8 passes over the metal slug 24, which is held in position by means of the wires 20 and 22 under tension. The proximity switch 26 is located in the region of the metal slug 24, and detects the presence of the metal slug.

In the event that the slug 24 encounters a significant blockage formed inside the tube 8 during the extrusion part of the manufacturing process, the wires 20 and 22 are placed under greater tension as the tube 8 is pulled along by the caterpillar haul off device 12, but the metal slug 24 cannot clear the interior of the tube. As a result, the second wire 20, which has a lower breaking strain than the first wire 22, breaks, resulting in the metal slug 24 becoming lodged in the tube 8 and carried along with the tube 8 as the tube is pulled along by means of the caterpillar haul off device 12. The proximity switch 26 then detects that the metal slug 24 has moved away from its original location, and triggers an alarm condition, alerting the operator that there is a blockage present inside the tube 8. Upon triggering of the alarm condition, the take up unit 16 can be set so that it automatically cuts the tube immediately after the faulty section is wound onto the drum. Such automatic take up units can be purchased from Nextrom Technologies, Route du Bois 37, CH-1024 Ecublens, Lausanne, Switzerland. The section of faulty tube can then be easily identified on the outside of the drum and manually removed. In this way, the drum only contains tube 8 having a generally obstruction free interior avoiding the need for any subsequent post production inspection.

It is to be appreciated that optical fibres (not shown) may be installed in the tube 8 at the same time as the extrusion process, in order to speed up the manufacturing process and thereby reduce costs. In this case, as can be seen from Figure 2, the slug 24' may be provided with an aperture 28 through which the optical fibres may pass as the slug 24' is moved relative to the internal bore of the tube.

Moreover, a pull cord (not shown), which may be used to subsequently pull the optical fibres or optical fibre cables through the internal bore of the tube 8, may be installed in the tube 8 at the same time as the extrusion process. In this case, as with the situation where the optical fibres are installed at the same time as the extrusion process, the slug 24' is provided with an aperture 28 through which the pull cord may pass as the slug 24' is moved relative to the internal bore of the tube 8.

It will be appreciated by persons skilled in the art that the above embodiment has been described by way of example only, and not in any limitative sense, and that various alterations and modifications are possible without departing from the scope of the invention as defined by the appended claims.

For example, the first tensile element may be made of plastics material such as Kevlar (registered trade mark), and the second tensile element may be made from commercially available fishing line having a breaking strain of, for example, 21bf.

Also, as well as ensuring that the metal slug 24 is fixed in position and conveying (either by means of pulling or blowing) the tube 8 along the apparatus 2, an alternative would be to keep the tube 8 fixed in position for a time after leaving the crosshead die 6 whilst conveying (either by means of attachment to first and second wires 22, 20 such as those described above, or by means of blowing) the metal slug 24 through the interior of the tube 8 and monitoring its movement. In this case, the alarm condition is triggered in the event that the slug 24 stops moving, which means it has become lodged on an obstruction in the interior of the tube 8. Once the metal slug 24 has been drawn through the section of tube 8, the inspected section of pipe 8 is advanced towards the take up unit 16 and more tube 8 is extruded and the inspection process is repeated.

## Claims

1. A method of manufacturing a tube (8), the method comprising the steps of:
- forming a tube (8) by extrusion; and
causing a body (24) to move longitudinally relative to the internal bore of the tube (8), and determining whether the body (24) ceases to move relative to the tube (8),
wherein: - at least part of said extrusion step and said step of causing a body (24) to move relative to the internal bore of the tube (8) are carried out simultaneously; **characterised in that** the body (24) is caused to move relative to the internal bore of the tube (8) by means of at least one first tensile element (22) attached to said body (24).

2. A method according to claim 1, wherein the body (24) is caused to move relative to the internal bore of the tube (8) by means of restraining said body (24) using said first tensile element (22), said first tensile element (22) having a predetermined breaking strain, and pulling the tube (8) by means of a traction means (12).

3. A method according to any one of claims 1 or 2,
wherein at least one said first tensile element (22) is a wire.

4. A method according to any one of claims 1 or 2,
wherein at least one said first tensile element (22) comprises plastics material.

5. A method according to any one of the preceding claims, wherein said body (24) is caused to move relative to the internal bore of the tube (8) by means of at least one second tensile element (20) connected to at least one said first tensile element (22), wherein at least one said second tensile element (20) has a predetermined breaking strain lower than the breaking strain of at least one said first tensile element (22).

6. A method according to claim 5, wherein at least one said second tensile element (20) is a wire.

7. A method according to claim 5 or 6, wherein at least one said second tensile (20) element comprises a fishing line.

8. A method according to any one of the preceding claims, wherein the body (24) is made from metal and the step of determining whether said body (24) ceases to move relative to the tube (8) comprises using a metal detection device (26) located outside of the tube (8) to monitor the location of the body (24) inside the bore of the tube (8).

9. A method according to any one of the preceding claims, further comprising the step of generating a signal in response to detection that the body (24) ceases to move along the tube (8).

10. A method according to claim 9, further comprising the step of actuating an alarm in response to said signal.

11. A method according to any one of the preceding claims, further comprising the step of cutting said tube (8) at a location adjacent where said body (24) ceases to move relative to said tube (8) in response to detection that the body (24) ceases to move along the tube (8).

12. A method according to claim 9 or 10 and claim 11, wherein said tube (8) is cut in response to said signal.

13. A method according to any one of the preceding claims, further comprising the step of installing at least one optical fibre in said tube (8) simultaneously with the step of forming said tube (8) by extrusion.

14. A method according to any one of the preceding claims, further comprising the step of installing at least one pull cord in said tube (8) simultaneously with the step of forming said tube (8) by extrusion.

15. A method according to any one of claims 13 or 14, further comprising the step of providing said body (24) with at least one aperture (28) through which at least one of at least one said optical fibre and at least one said pull cord passes as the body (24) is caused to move relative to the internal bore of the tube (8).

## Patentansprüche

1. Verfahren zum Herstellen eines Rohres (8), wobei das Verfahren die folgenden Schritte umfasst:
Formen eines Rohres (8) durch Strangpressen; und
Veranlassen eines Körpers (24), sich relativ zur Innenbohrung des Rohres (8) längs zu bewegen, und Ermitteln, ob der Körper (24) aufhört, sich relativ zu dem Rohr (8) zu bewegen,
wobei wenigstens ein Teil des genannten Strangpressschrittes und des genannten Schrittes zum Veranlassen eines Körpers (24), sich relativ zur Innenbohrung des Rohres (8) zu bewegen, gleichzeitig durchgeführt werden,
**dadurch gekennzeichnet, dass** der Körper (24) durch wenigstens ein erstes Zugelements (22), das an dem genannten Körper (24) angebracht ist, veranlasst wird, sich relativ zur Innenbohrung des Rohres (24) zu bewegen.

2. Verfahren nach Anspruch 1, wobei der Körper (24) durch Festhalten des genannten Körpers (24) mithilfe des genannten ersten Zugelements (22), wobei das genannte erste Zugelement (24) eine vorbestimmte Bruchdehnung hat, und Ziehen des Rohres (8) durch eine Traktionseinrichtung (12) veranlasst wird, sich relativ zur Innenbohrung des Rohres (8) zu bewegen.

3. Verfahren nach einem der Ansprüche 1 oder 2, wobei wenigstens ein genanntes erstes Zugelement (22) ein Draht ist.

4. Verfahren nach einem der Ansprüche 1 oder 2, wobei wenigstens ein genanntes erstes Zugelement (22) Kunststoff umfasst.

5. Verfahren nach einem der vorhergehenden Ansprüche, wobei der genannte Körper (24) durch wenigstens ein zweites Zugelements (20), das mit wenigstens einem genannten ersten Zugelement (22) verbunden ist, veranlasst wird, sich relativ zur Innenbohrung des Rohres (8) zu bewegen, wobei wenigstens ein genanntes zweites Zugelement (20) eine vorbestimmte Bruchdehnung hat, die niedriger als die Bruchdehnung von wenigstens einem genannten ersten Zugelement (22) ist.

6. Verfahren nach Anspruch 5, wobei wenigstens ein genanntes zweites Zugelement (20) ein Draht ist.

7. Verfahren nach Anspruch 5 oder 6, wobei wenigstens ein genanntes zweites Zugelement (20) eine Angelschnur aufweist.

8. Verfahren nach einem der vorhergehenden Ansprüche, wobei der Körper (24) aus Metall hergestellt ist und der Schritt des Ermittelns, ob der genannte Körper (24) aufhört, sich relativ zu dem Rohr (8) zu bewegen, das Verwenden einer Metalldetektorvorrichtung (26) aufweist, die sich außerhalb des Rohres (8) befindet, um die Lage des Körpers (24) im Inneren der Bohrung des Rohres (8) zu überwachen.

9. Verfahren nach einem der vorhergehenden Ansprüche, das ferner den Schritt des Erzeugens eines Signals als Reaktion auf die Erkennung, dass der Körper (24) aufhört, sich an dem Rohr (8) entlang zu bewegen, aufweist.

10. Verfahren nach Anspruch 9, das ferner den Schritt des Auslösens eines Alarms als Reaktion auf das genannte Signal aufweist.

11. Verfahren nach einem der vorhergehenden Ansprüche, das ferner den Schritt des Schneidens des genannten Rohres (8) an einer Stelle neben der, an welcher der genannte Körper (24) aufhört, sich am Rohr (8) entlang zu bewegen, als Reaktion auf die Erkennung, dass der Körper (24) aufhört, sich relativ zu dem genannten Rohr (8) zu bewegen.

12. Verfahren nach Anspruch 9 oder 10 und Anspruch 11, wobei das genannte Rohr (8) als Reaktion auf das genannte Signal geschnitten wird.

13. Verfahren nach einem der vorhergehenden Ansprüche, das ferner den Schritt des Installierens von wenigstens einer Lichtleitfaser in dem genannten Rohr (8) gleichzeitig mit dem Schritt des Formens des genannten Rohres (8) durch Strangpressen aufweist.

14. Verfahren nach einem der vorhergehenden Ansprüche, das ferner den Schritt des Installierens von wenigstens einem Zugseil in dem genannten Rohr (8) gleichzeitig mit dem Schritt des Formens des genannten Rohres (8) durch Strangpressen aufweist.

15. Verfahren nach einem der Ansprüche 13 oder 14, das ferner den Schritt des Versehens des genannten Körpers (24) mit wenigstens einer Öffnung (28) aufweist, durch welche wenigstens eine genannte Lichtleitfaser und/oder wenigstens ein genanntes Zugseil hindurchgeführt wird, während der Körper (24) veranlasst wird, sich relativ zur Innenbohrung des Rohres (8) zu bewegen.

## Revendications

1. Procédé de fabrication d'un tube (8), le procédé comprenant les étapes consistant à :
- former un tube (8) par extrusion ; et
amener un corps (24) à se déplacer longitudinalement par rapport à l'alésage interne du tube (8), et déterminer si le corps (24) cesse de se déplacer par rapport au tube (8), où : - au moins une partie de ladite étape d'extrusion et ladite étape consistant à amener un corps (24) à se déplacer par rapport à l'alésage interne du tube (8) sont effectuées simultanément ;
**caractérisé en ce que** le corps (24) est amené à se déplacer par rapport à l'alésage interne du tube (8) au moyen d'au moins un premier élément de traction (22) fixé audit corps (24).

2. Procédé selon la revendication 1, où le corps (24) est amené à se déplacer par rapport à l'alésage interne du tube (8) en retenant ledit corps (24) à l'aide dudit premier élément de traction (22), ledit premier élément de traction (22) ayant une contrainte de rupture prédéterminée, et en tirant le tube (8) par un moyen de traction (12).

3. Procédé selon une quelconque des revendications 1 ou 2, où au moins un dit premier élément de traction (22) est un fil.

4. Procédé selon une quelconque des revendications 1 ou 2, où au moins un dit premier élément de traction (22) comprend une matière plastique.

5. Procédé selon une quelconque des revendications précédentes, où ledit corps (24) est amené à se déplacer par rapport à l'alésage interne du tube (8) au moyen d'au moins un second élément de traction (20) connecté à au moins un dit premier élément de traction (22), où au moins un dit second élément de traction (20) a une contrainte de rupture prédéterminée inférieure à la contrainte de rupture d'au moins un premier élément de traction (22).

6. Procédé selon la revendication 5, où au moins un second élément de traction (20) est un fil.

7. Procédé selon la revendication 5 ou 6, où au moins un dit second élément de traction (20) comprend une ligne de pêche.

8. Procédé selon une quelconque des revendications précédentes, où le corps est constitué de métal et l'étape consistant à déterminer si ledit corps (24) cesse de se déplacer par rapport au tube (8) comprend l'utilisation d'un dispositif de détection de métal (26) situé à l'extérieur du tube (8) afin de surveiller l'emplacement du tube (24) à l'intérieur de l'alésage du tube (8).

9. Procédé selon une quelconque des revendications précédentes, comprenant en outre l'étape consistant à générer un signal en réponse à la détection que le corps (24) cesse de se déplacer le long du tube (8).

10. Procédé selon la revendication 9, comprenant en outre l'étape consistant à actionner une alarme en réponse audit signal.

11. Procédé selon une quelconque des revendications précédentes, comprenant en outre l'étape consistant à découper ledit tube (8) à un emplacement adjacent à l'endroit où ledit corps (24) cesse de se déplacer par rapport audit tube (8) en réponse à la détection que le corps (24) cesse de se déplacer le long du tube (8).

12. Procédé selon la revendication 9 ou 10 et la revendication 11, où ledit tube (8) est découpé en réponse audit signal.

13. Procédé selon une quelconque des revendications précédentes, comprenant en outre l'étape consistant à installer au moins une fibre optique dans ledit tube (8) simultanément à l'étape consistant à former ledit tube (8) par extrusion.

14. Procédé selon une quelconque des revendications précédentes, comprenant en outre l'étape consistant à installer au moins un cordon de traction dans ledit tube (8) simultanément à l'étape consistant à former ledit tube (8) par extrusion.

15. Procédé selon une quelconque des revendications 13 ou 14, comprenant en outre l'étape consistant à munir ledit corps (24) d'au moins une ouverture (28) à travers laquelle passe au moins l'un d'au moins une dite fibre optique et au moins un dit cordon de traction tandis que le corps (24) est amené à se déplacer par rapport à l'alésage interne du tube (8).
